# EUROPEAN PATENT APPLICATION

(11) **EP 4 044 375 A1**
(43) Date of publication of application: **17.08.2022**
(21) Application number: 21382110.1
(22) Date of filing: 11.02.2021
(51) Int. Cl.: H01R 4/62, H02S 40/30, H01R 11/12, H01R 4/20

(54) **HIGH POWER PHOTOVOLTAIC CONNECTOR**

(71) Applicant: Soltec Innovations, S.L., 30500 Molina de Segura (ES)
(72) Inventor: Torrano Carrillo, Francisco Javier, 30820 Alcantarilla (ES); Teruel Hernández, José Alfonso, 30007 Molina de Segura (ES); Carpio Obre, Francisco Javier, 46870 Ontinyent (ES)
(74) Representative: Isern Patentes y Marcas S.L.

(57) **Abstract**

The object of the invention provides a solution to the problem of connecting electrical systems in solar systems. Said solution is based on a a high power photovoltaic connector of the invention comprising two, preferably cylindrical, bimetallic connectors having a copper end and an aluminium end, being connected to each other by their copper end preferably in the form of a shovel making such a joint by means of tightening elements and to an aluminium conductor by means of its cylindrical aluminium end making such a joint by means of a tightening matrix or screws preferably furnished on the aluminium end. Said tightening matrix compressing the aluminium end and the aluminium conductor together due to deformation; being both the aluminium end and the aluminium conductor made of the same material with identical or very similar mechanical properties what the resulting tightening matrix achieves is to compress the aluminium end of the bimetallic connectors once the aluminium conductor has been inserted into it, so that the assembly is fixed due to the deformation of the aluminium.

## Description

### OBJECT OF THE INVENTION

The invention hereby provided belongs to the field of conversion of solar energy into electrical power by means of photovoltaic technologies.

More precisely, the object of the invention is directed to a photovoltaic harness.

### BACKGROUND

Photovoltaic systems consist of photovoltaic modules which are arranged in arrays and generate direct current, the level of direct current being dependent on solar radiation and the level of direct voltage dependent on temperature. Photovoltaic systems can be installed either as an inverter system or as a micro-inverter system.

Classic inverter systems use direct current (DC) wiring to electrically connect multiple photovoltaic modules to a single inverter. The inverter then converts the direct current energy of the photovoltaic modules into alternating current, for example alternating current, which is suitable for transmission in a power grid. A typical microinverter system, on the other hand, uses DC wiring and a junction box to electrically connect a microinverter to each photovoltaic module to form an alternating current (AC)-photovoltaic module.

The construction of typical AC-photovoltaic modules makes indoor field repairs time consuming. If there is an internal wiring problem, a technician should diagnose the problem on site to determine which component of the module needs repair. An electrical fault can occur in the microinverter assembly itself, which is attached to a photovoltaic module, the diodes in the junction box, or between the two DC terminals containing the Respective DC terminals, which connect junction box and microinverter. Since a wrench or a single tool must be used to remove each of the junction boxes, microinverter and disassemble the DC connectors of each component to determine which component of the CA photovoltaic module is faulty, the on-site repair is time consuming and expensive. In addition, the wire connection between the photovoltaic panel and the microinverter usually includes about one to two feet of DC power cord and a junction box, which adds to the cost of the photovoltaic system.

In today's market there are elements that allow the creation of distributed photovoltaic wiring systems using a DC Bus (commonly referred to as "Harness"), which are mainly based on the use of:
- Insulation drill connectors (non-disconnectable): These are elements that allow, through the use of blades, to drill the insulation of the conductor acting as a DC Bus, creating an electrical contact between it and the photovoltaic chains (strings) that want to be included in the Bus. This process is done in the field and the Bus is configured as a continuous (indivisible) line from which branches are born.
- Welds: This is in concept like the one described above. A series of branches are created in the C.C. Bus by welding (or similar process) directly onto the conductor. The welded area, devoid of insulation, is then subjected to a polymer injection process to return the insulation to the bus.
- Disconnectable connectors: This is a connector itself that allows the division of the wiring system into different sections that are interconnected thanks to the use of the aforementioned elements. This system is only used by Soltec in its "DC Harness" product and given the characteristics of it, it must be factory assembled.

US9391380B2 discloses an electrical connector/cable harness includes an electrically insulative housing and first and second passageways extending from a first end of the connector/cable harness to a second end thereof, first and second electrically conductive wires disposed in the passageways, respectively, wherein the passageways and the wires therein reverse their dispositions in the connector/cable harness such that at the second end of the connector/cable harness the two wires are disposed oppositely to their disposition at the first end of the connector/cable harness.

WO2014198856A1 relates to alternating-current cabling for a photovoltaic generator having a plurality of photovoltaic modules equipped with module inverters. The alternating-current cabling comprises an alternating-current trunk line and branch cables connected thereto for feeding the alternating current from the plurality of module inverters into the common alternating-current trunk line, such that the alternating-current trunk line can be routed at a distance from the module inverters and is composed of a plurality of pre-assembled cable modules. The pre-assembled cable modules each comprise the following components: a first and a second trunkline plug connector; a trunk-line cable segment that connects the first and second trunk-line plug connectors; and a branch cable electrically connected to the trunk-line cable segment.

US9685904B2 discloses photovoltaic systems and more particularly improved systems and methods for forming DC electrical connections between a DC connector of a photovoltaic panel to a DC connector of a DC-to-AC micro-inverter and AC electrical connections between the micro-inverter and AC wiring harness of the photovoltaic system.

In the light of the known solutions it is desirable to have a photovoltaic connectors for high power application that can be connected in the field and, in case of any eventuality the status of the connection, can be evaluated also avoiding the possibility of an isolation defect in a non-protected zone.

### DESCRIPTION

The object of the invention provides a Bi-Metallic High Power Photovoltaic Connectors defined in the correspondent claims and configured to be installed on field providing the following advantages:
- Interconnection points are recordable, a great advantage over known systems. And 2., since in case of any eventuality the status of the connection can be evaluated.
- String protection is integrated. Required protections are located next to the endpoint eliminates the possibility of an isolation defect in an unprotected zone. This is a security advantage over known systems.
- It can be connected in the field, which is a further advantage over known systems

### DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:

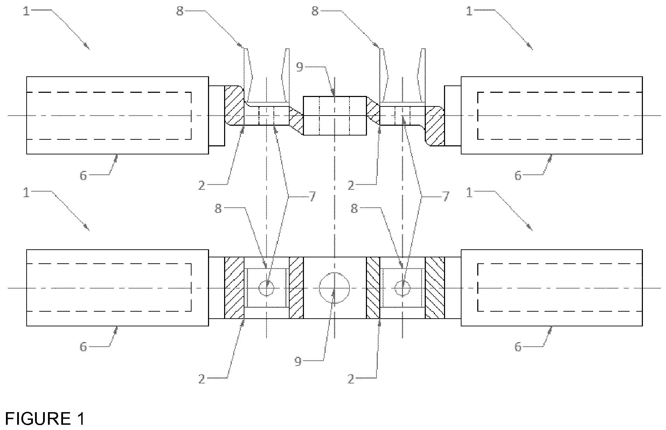

Figure 1: Shows a diagram depicting an arrangement of connectors for horizontal configuration.
Figure 2: Shows a diagram depicting a layout for horizontal configuration.
Figure 3: Shows a diagram depicting two connectors are assembled facing each other.
Figure 4: Shows a diagram depicting a first configuration of the object of the invention.

### DETAILED DESCRIPTION

In a preferred embodiment of the object of the invention, it is provided a high power photovoltaic connector of the invention comprising two, preferably cylindrical, bimetallic connectors (1) having a copper end and an aluminium end (6), being connected to each other by their copper end preferably in the form of a shovel (2), making such a joint by means of tightening elements such as a system of nut (3) and screw (4), and to an aluminium conductor (5) by means of its cylindrical aluminium end (6), making such a joint by means of a tightening matrix or screws preferably furnished on the aluminium end (6). Said tightening matrix compressing the aluminium end (6) and the aluminium conductor (5) together due to deformation; being both the aluminium end (6) and the aluminium conductor (5) made of the same material with identical or very similar mechanical properties what the resulting tightening matrix achieves is to compress the aluminium end (6) of the bimetallic connectors ((1) once the aluminium conductor (5) has been inserted into it, so that the assembly is fixed due to the deformation of the aluminium.

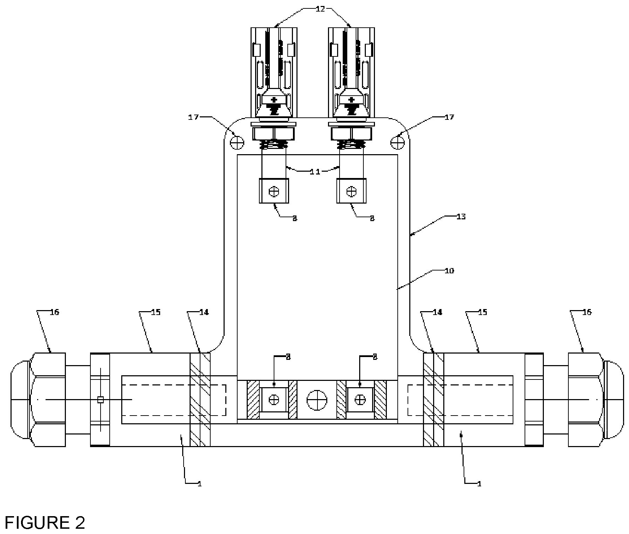

In a first configuration designed for horizontal arrangements the object of the invention comprises that the copper blades (2) have such a shape that by assembling two bimetallic connectors (1) being aligned faced with each other in a mirror arrangement. In addition , each shovel (2) has a first smaller diameter hole (7) on which a fuse clip (8) and a second larger diameter hole (9) will be placed to join the two bimetallic connectors (1). A printed circuit board PCB (10) can be used to arrange the two bimetallic connectors (1) as well as the necessary fuse clips (8) as shown in Figure 2. The top fuse clips (8) are preferably attached to sections of copper plate or photovoltaic conductor (11) that will be connected to their respective fuse clip (8), using for this purpose a screw or similar element, and a photovoltaic connector (12) at its other end, with the polarity of this connector being suitable for the pole (positive or negative) on which the energy production system will be connected to.

Once all the elements have been arranged, including the corresponding fuse placed between their respective clips (8), the system can be encapsulated in an insulating envelope (13), either registerable (an envelope formed by a bottom cover and a top cap that can be opened) or not (an injection of insulating polymer). The insulating envelope (13) may end in a thread (14) on each of the bimetallic connectors (1) which shall be extended by about 10 mm from the end of the copper zone (point A). Once the connector has been attached to the cable, a cylindrical guard (15) will be assembled on this thread, on which a cable gland (16) will be assembled, leaving all the elements insulated and protected.

The enclosure will have elements (17) such as holes, which allow it to be directly attached to the support structure of the photovoltaic system.

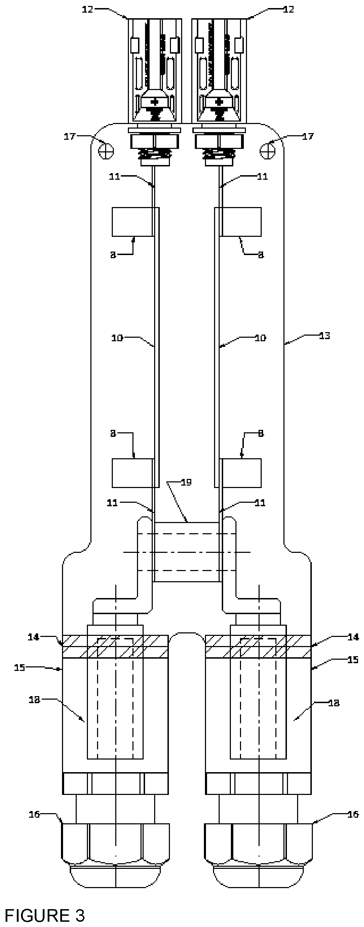

In a second configuration designed for vertical arrangements we will have that the copper blades (18) have a typical annular shape. Two connectors are assembled facing each other as shown in Figure 3 by using tightening elements such as a nut (3) and screw (4) system. The resulting assembly uses a copper separator (19) that will maintain an adequate distance between the two bimetallic connectors (1).

In a preferred embodiment of the invention, each bimetallic connectors (1) is connected to a fuse clip (8) which is in turn attached to a PCB (10) comprising at its opposite end another fuse clip (8) from which a copper plate or photovoltaic conductor (11) configured to be connected to a photovoltaic connector (12). In an alternative embodiment of the invention, each bimetallic connectors (1) is connected to the fuse clip (8) by means of a copper plate or a photovoltaic conductor (11).

Hence, from each bimetallic connectors (1) a copper plate or photovoltaic conductor (11) may be acting as interconnector to the fuse clip (8) which may be attached to a PCB (10) that will have at its opposite end another fuse clip (8) from which another copper plate or photovoltaic conductor (11) will be born that will connect to the photovoltaic connector (12).

The final result thus formed will be, identical to the previous case, encapsulated by an insulating envelope (13), registerable or not, which may end in a thread (14) on each of the bimetallic connectors (1) in order to assemble the respective cylinder protector (15) and cable gland (16) providing protection and insulation. Likewise, the enclosure will have elements (17) such as holes, which allow direct attachment to a support structure of the photovoltaic system itself.

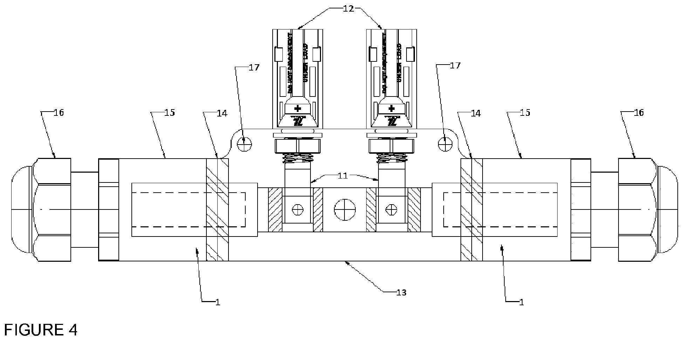

It should be noted that the fuses and clips (8) required for assembly may not be part of the system, being external elements. In such a case, the proposed system is simplified, with only connectors (1 or 18 depending on the configuration sought), copper plates or photovoltaic cable (11) directly connected to connectors (1) and photovoltaic connectors (12), insulating envelope (13) recordable or not including their fasteners (17), with their respective threaded ends (14), cylindrical guards (15) and cable glands (16). In the case of the first configuration the system would look like the one represented in figure 4.

## Claims

1. A high power photovoltaic connector **characterised by** comprising two bimetallic connectors (1) comprising in turn a cooper end and a aluminium end (6), being the two bimetallic connectors (1) connected to:
• each other by their copper end, making such a joint by means of fastening elements, and
• an aluminium conductor (5) by means of the aluminium end (6), so that a tightening matrix is generated joining the aluminium conductor (5).

2. The high power photovoltaic connector of claim 1 wherein-
• the copper blades (2) have such a shape that when assembling the bimetallic connectors (1) they are aligned faced with each other in a mirror arrangement, and
• each shovel (2) comprises a first smaller diameter hole (7) configured to host a fuse clip (8) and a second larger diameter hole (9) to join the bimetallic connectors (1),
the high power photovoltaic connector comprising:
• a printed circuit board PCB (10) configured to arrange the bimetallic connectors (1) and the fuse clips (8), wherein:
i. top fuse clips (8) are attached to sections of copper plate or photovoltaic conductor (11) connected to their respective fuse clip (8), and
ii. a photovoltaic connector (12) at its other end, with the polarity of said photovoltaic connector (12) being suitable for the pole on which the high power photovoltaic connector will be connected.

3. The high power photovoltaic connector of either claim 1 or 2 wherein the copper blades (18) have an annular shape.

4. The high power photovoltaic connector of any one of claims 1 to 3, further comprising at least one copper separator (19) arranged between bimetallic connectors (1) to maintain bimetallic connectors (1) separated.

5. The high power photovoltaic connector of any one of claims 2 to 4 wherein each bimetallic connectors (1) is connected to a fuse clip (8) which is in turn attached to a PCB (10) comprising at its opposite end another fuse clip (8) from which a copper plate or photovoltaic conductor (11) configured to be connected to a photovoltaic connector (12).

6. The high power photovoltaic connector of claim5, wherein each bimetallic connectors (1) is connected to the fuse clip (8) by means of a copper plate or a photovoltaic conductor (11).

7. The high power photovoltaic connector of any one of the preceding claims, further comprising an insulating envelope (13) ending in a thread (14) on each of the bimetallic connectors (1) in order to assemble the respective cylinder protector (15) and cable gland (16)providing insulation and protection.

8. The high power photovoltaic connector of claim 7, wherein the insulating envelope (13) is either:
• a registerable insulating envelope (13) comprising an envelope formed by a bottom cover and a top cap that can be opened, or
• a non-registrable insulating envelope (13) comprising an injection of insulating polymer.

9. The high power photovoltaic connector of any one of the preceding claims further comprising an enclosure comprising in turn attachment elements (17) such as holes, which allow it to be directly attached to the support structure of the photovoltaic system.

10. The high power photovoltaic connector of any one of the preceding claims, wherein the fastening elements comprise a system of nut (3) and screw (4).

11. The high power photovoltaic connector of any one of the preceding claims, wherein the bimetallic connectors (1) are connected to each other by their copper end forming a shovel (2) shape.

12. The high power photovoltaic connector of any one of the preceding claims, wherein the bimetallic connectors (1) are cylindrical.
